(19) Europäisches Patentamt / European Patent Office / Office européen des brevets

(11) **EP 2 339 429 A2**

(12) **EUROPEAN PATENT APPLICATION**

(43) Date of publication:
**29.06.2011 Bulletin 2011/26**

(51) Int Cl.:
***G06F 1/32*** *(2006.01)*

(21) Application number: **10193867.8**

(22) Date of filing: **06.12.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **07.12.2009 NL 2003915**

(71) Applicant: **Yggdra Solutions**
**6991 DK Rheden (NL)**

(72) Inventors:
• **Van Bokhoven, Frank**
  **6991 DK, Rheden (NL)**
• **Van Maurik, Remco**
  **6991 DK, Rheden (NL)**

(74) Representative: **Engelfriet, Arnoud Peter**
**ICTRecht B.V.**
**P.O. Box 1514**
**5200 BN 's-Hertogenbosch (NL)**

(54) **Power management**

(57)    The invention relates to a method of influencing power consumption of a process being executed on a computer system, comprising calculating an estimate of usage of at least one system resource by the process, converting the estimate of usage into a power consumption estimate, monitoring a time period during which the process is in an idle state and influencing at least one aspect of the computer system if the power consumption estimate exceeds a predefined limit while the process is in an idle state. Preferably this influencing comprises automatic termination of the process if the power consumption estimate exceeds the predefined limit. The at least one system resource may be selected from the group of: a central processing unit (CPU), a storage medium such as a hard disk, a monitor, a graphics card and a communications bus.

FIG. 4

EP 2 339 429 A2

## Description

### Field of the invention

The invention relates to a method of and system for influencing power consumption of a process being executed on a computer system.

The invention further relates to a computer program product.

### Background of the invention

'Green computing' is the study and practice of designing, manufacturing, using, and disposing of computers, servers, and associated subsystems and connected devices - such as monitors, printers, storage devices, mice and networking and communications systems - efficiently and effectively with minimal or no impact on the environment. For example, US2004260411 discloses a method to remotely control a home's thermostat to improve its efficiency.

One aspect of green computing relates to power consumption and the reduction thereof of computer systems. While this subject has received significant attention in the professional area, e.g. reduction of server room power usage, the consumer field is lagging behind. This is significant, because these days every household owns multiple computers: desktop computers, laptops, netbooks, smartphones and so on. About 20% of all electric power in the Western world is consumed by computerized devices, and 15% of that 20% is in turn consumed by private households. See Avi Mendelson, 'Memory management challenges in the power-aware computing era', Proceedings of the 5th international symposium on Memory management, Ottawa, Ontario, Canada, p. 1-2, 2006. ISBN: 1-59593-221-6.

Most computer users are familiar with 'power saving' techniques such as screen blanking and standby modes after a certain amount of inactivity. While this may create an impression that the computer is operating at decreased power consumption levels, in practice this is far from true. Rajesh Cheda, Dan Shookowsky, Steve Stefanovich, and Joe Toscano have shown that it is in fact the processor (CPU) that is responsible for over 70% of the power consumption of the computer. 'Profiling Energy Usage for Efficient Consumption', The Architecture Journal, nr. 1, January 2009, available through the Microsoft Developers Network at <msdn.microsoft.com/en-us/library/dd393308.aspx>. Hence there is a desire to make consumers aware of the power consumption of their CPU and related equipment such as monitors and printers.

A common way to gain insight in power consumption is to install a power and energy meter between plug and socket. This type of meter, commonly available under many brands, records all power that is consumed by the computer when it is on. These meters however only provide a low level of granularity: one can only see the total power consumption of the equipment. If for example a separate readout of power consumption from a printer is desired, a second meter must be installed. Another disadvantage of these meters is that they do not show the potential for energy saving.

Several other approaches have also been investigated. US5996083 discloses a micro processor which includes a power control register for controlling the rate of execution and therefore the power consumed by the processor. This approach has the disadvantage that every consumer would have to buy a new computer with this type of microprocessor to benefit from the power control feature. KR20050002667 discloses a method for profiling consumption power of software instructions executed on a processor, in which power consumption is shown for each individual software application running on a Windows operating system. However, none of these approaches provide a consumer with a simple and easy-to-use insight in the costs of operating their personal computer. US2009/0007128A1 discloses a method and system for orchestrating system resources on a data processing system. In this disclosure each resource has a predefined data sheet defining an expected power usage. When software is executed on the data processing system, the method monitors the activities of the software and tracks the use of the system resources. The power usage of the software is estimated according to the tracked use and the associated expected power usage. Based on a comparison of estimated power usage to a predetermined thresholds the system takes actions in order to meet the energy consumption policies (like add new resources, move jobs, etc.).

There thus is a need for a method that provides a better insight in the costs of power consumption of a personal computer (or similar device)

### Summary of the invention

The invention improves on the above by providing a method of influencing power consumption of a process being executed on a computer system, comprising calculating an estimate of usage of at least one system resource by the process, converting the estimate of usage into a power consumption estimate monitoring a time period during which the process is in an idle state and influencing at least one aspect of the computer system if the power consumption estimate exceeds a predefined limit while the process is in an idle state. Preferably this influencing comprises automatic termination of the process if the power consumption estimate exceeds the predefined limit. The at least one system resource may be selected from the group of: a central processing unit (CPU), a storage medium such as a hard disk, a monitor, a graphics card and a communications bus.

The calculation steps allow for an easy yet reliable estimate of the power consumption (in Watts, kWh or other desired units) by the process. As the estimate is computed for each process separately, it becomes possible to influence the operation of the system at the application level, for example by terminating a process if it consumes too much power or if it is unnecessary for the correct running of the operating system.

The method is preferably executed on the same computer system as the process. Alternatively the method is preferably executed on a computer system that is connected through a network to the computer executing the process.

In an embodiment a score is derived from a division of (a) the time period during which the resource is in an energy saving state and (b) the time period the process is in the idle state, and the predefined limit is construed as a lower limit for the score. The computation of the score allows a distinction between two systems with identical actual time of energy saving for a resource but different overall idle time during a particular time period (e.g. a working day). The higher the idle time, the lower the score. In other words, the more a process or resource is in an idle state, the higher the time during which energy savings should occur. Using this score as a lower limit presents a much improved criterion for deciding whether to terminate the process in question or otherwise influence the operation of the system, as it avoids influencing in situations where little actual waste occurs.

The invention further provides for a computer system configured for influencing power consumption of a process being executed on the computer system, comprising means for calculating an estimate of usage of at least one system resource by the process, means for converting the estimate of usage into a power consumption estimate and means for influencing at least one aspect of the computer system based on the power consumption estimate.

The invention further provides for a computer program product comprising instructions for executing the method of the invention on a programmable device and a machine-readable storage medium comprising instructions for executing the method of the invention on a programmable device.

The invention further provides for a server system comprising the medium of the previous claim and being connected to a network, arranged for allowing the instructions to be downloaded to client systems connected directly or indirectly to the network.

### Brief description of the figures

The invention will now be elaborated upon with reference to the figures, in which

Fig. 1 schematically shows a home computer set-up;
Fig. 2 schematically shows a preferred embodiment of the invention in the form of a set of modules that together provide the functionality provided by the invention;
Fig. 3 shows a screenshot relating to an embodiment of the invention;
Fig. 4 shows a flowchart illustrating one aspect of the invention;
Fig. 5 shows an example chart that relates memory and CPU usage to estimated power consumption;
Fig. 6 shows a chart from Xiaobo Fan, Wolf-Dietrich Weber, Luiz Andre Barroso, *Power Provisioning for a Warehouse-sized Computer,* ISCA 2007 to illustrate system power as a function of CPU utilization;
Fig. 7 shows another screenshot relating to an embodiment of the invention; and
Fig. 8 shows a system architecture that implements a preferred embodiment of the invention in an enterprise environment.

### Detailed description of certain embodiments

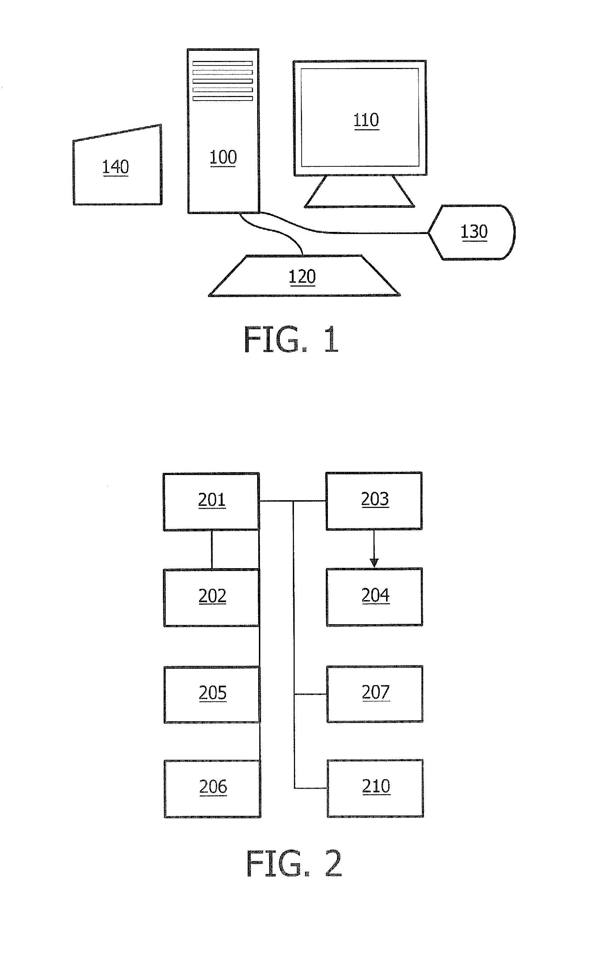

Fig. 1 schematically shows a home computer set-up that will be used by way of example to illustrate the principles of the invention. The set-up comprises a desktop computer 100 with a monitor or display screen 110, keyboard 120, mouse 130 and printer 140. It is to be understood that this set-up can easily be varied in many ways, as is well known to the person skilled in the art. For example, instead of a desktop computer 100 as shown, a laptop with or without separate display screen 110 could be used. The computer 100 may comprise one or two or more CPUs, a DVD or CD read/write unit, one or more USB or Firewire connectors or other components. Display screen 110 could be extended with one or even two extra display screens, a set-up popular with gaming enthusiasts. Additional in/output devices could be provided, for example a joystick, steering wheel, graphic tablet and/or projector (beamer).

The desktop computer 100 is further equipped with a hard disk or similar medium (not shown) to store operating system and application software. A wide variety of software can be installed. The invention 'hooks' into the operating system itself and thus is able to monitor all software applications that are being executed at any particular moment in time. Existence and methods of using such hooks are common knowledge among operating system programmers and thus will not be elaborated upon further.

Preferably the invention is provided as a software library or DLL that hooks into a "task manager" type of application, i.e. a software application that provides an overview of currently active software applications and/or processes. Alternatively the invention could be provided as a so-called "widget", a small application that presents itself on a desktop screen or in a taskbar. Of course many other ways to provide the invention are possible. The invention can be provided as pre-installed software, as a download (paid or free) or on a physical carrier such as a DVD or USB memory.

Fig. 2 schematically shows a preferred embodiment of the invention in the form of a set of modules that together provide the functionality provided by the invention. The invention comprises a registration module 201, which is invoked upon system startup and uses the 'hooks' to register itself with the task manager application.

When registration is complete, a power consumption estimating module 202 is activated which continuously monitors the power consumption of individual applications, processes and/or hardware components connected to the computer 100. A power consumption recording module 203 is provided to record the power consumption of resources and times when they are in an idle state. The module 203 is extended with a power control module 204 configured to control, limit or terminate resources that are in an idle state for unacceptable periods of time. The functionality of these power-related modules will be elaborated upon below.

A reporting module 205 can be provided to periodically provide compiled reports or raw statistical data to a certain location. For example when the invention is employed in a business, school, government agency or similar organization, the reporting module 205 could provide reports or data to the IT department, allowing it to compile detailed overviews of power consumption and savings of each application on each computer in the organization.

The reporting may advantageously distinguish between power consumption during idle time and during busy time, i.e. when resources are in active use. This is based on the insight that a mere report of power consumption does not say much about the 'greenness' or power savings achieved. A system that consumes a certain amount of power all day may be power-efficient if the operator actually uses the system all day, e.g. by typing and printing documents all day, or very inefficient if the operator leaves the system alone all day. Merely recording the power used does not distinguish between these two extremes.

By having the reporting call out power consumption during idle time, one may obtain a better insight in the wasted or beneficial use of power. In a preferred embodiment, a score is reported of the power savings as a fraction of the idle time of one or more resources:

$$score = (time\ during\ which\ energy\ savings\ occur\ /\ idle\ time)$$

With this formula, two systems with identical actual time of energy saving for a resource but different overall idle time during a particular time period (e.g. a working day) would have different scores: the higher the idle time, the lower the score. In other words, the more a process or resource is in an idle state, the higher the time during which energy savings should occur.

Using this formula, in addition to reporting the influencing of the invention can be improved: a lower limit for the score can be used as the predefined limit that determines whether the at least one aspect of the computer system is to be influenced.

One may additionally apply a multiplier to the score computation to influence the score, e.g. based on past insights or on a profile of the operator. This multipler can be used to ensure the score remains within a certain bandwidth. For example, the inventor has found it advantageous to apply a factor of 0.5 times Pi to ensure the score remains between 1 and 150 to ensure a consistent comparison between scores. Different kinds of operators may benefit from different multipliers to ensure the score does not go below the lower limit at the same time. A help desk operator may need his computer to be available more quickly than a doorman, for example.

A configuration module 210 is available to allow the user to customize certain aspects of the invention. For example, the price of a unit of power typically needs to be entered by the user as it can change at any time. The user might also desire to eliminate certain information from view, or enable or disable certain functionality.

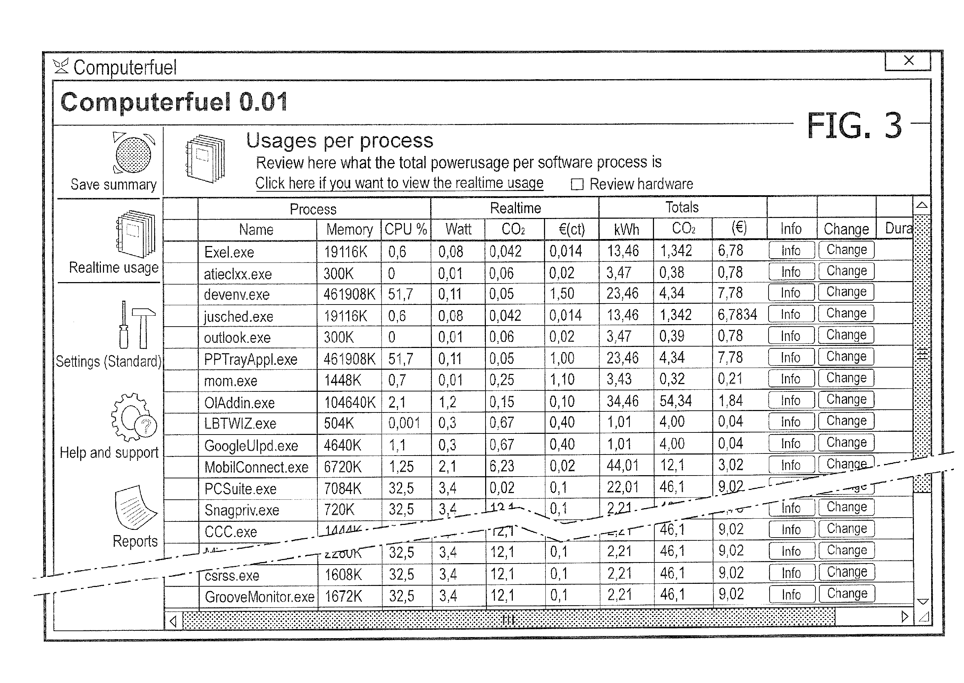

Fig. 3 shows a screenshot relating to an embodiment of the invention. In this embodiment, the desktop computer 100 is equipped with one of Microsoft's Windows operating systems, e.g. Windows XP, Vista or Windows 7. Alternative operating systems, such as MacOS X or one of the many open source Linux variants can also be used.

In the embodiment of Fig. 3, the screenshot shows the "Task manager" interface that is familiar to users of Microsoft Windows. Using this interface a user can examine each application and task currently active on the computer 100. The Task manager by default shows CPU and memory usage but can be configured to show many more items of information about applications. The Task manager also offers the possibility to terminate applications.

The application as shown provides several items in accordance with the present invention. In the embodiment of Fig. 3, six extra columns are present: real-time usage in Watts, $CO_2$ and money in Eurocents, and total usage in kilowatt-hours, $CO_2$ and Euros. "Usage" refers to the estimated power consumed by each application in Watts or kWh.

$CO_2$ generation refers to the estimated amount of $CO_2$ (carbon dioxide) generated by each application. The monetary amounts, provide estimates of the cost of the power consumed by each application (of course dollars, Yen, cents or other units of cost may also be used). How these estimates are generated will be explained below.

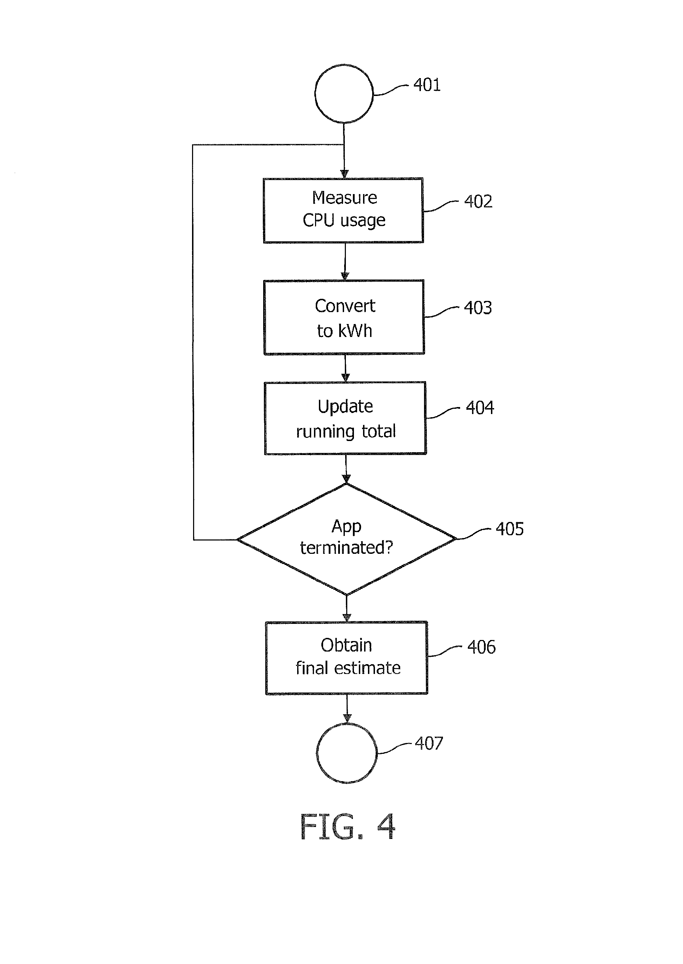

Fig. 4 shows a flowchart illustrating one aspect of the invention, relating to estimating power consumption. In this flowchart, only the estimating of power consumption as a function of CPU usage is shown. It will be readily apparent that similar estimates can be made for memory usage, disk usage, graphic card usage, system bus usage and/or other hardware or software resources. Furthermore, the method is described for one application only to keep the explanation readable. Of course in practice the method would be used for every running application simultaneously.

When the process is initiated, after the starting step 401 the actual CPU usage is measured in measuring step 402. As is well known, the operating system measures the actual CPU clock ticks that each application or thread consumes. (A thread is a part of an application that executes separately.) In accordance with the present invention, these ticks are converted by a power consumption estimating module according to the invention into an estimate of actual power consumption of each application. Almost every operating system known today has a standard programming interface or system call to retrieve CPU clock ticks for particular applications. It is noted however that the number of significant digits used for these ticks influences the reliability of the estimates made. The inventors have found in practice that eight to ten digits provides an adequate estimate on average desktop computers.

There are many ways known in the art for measuring clock ticks with the desired reliability. Microsoft's Windows family of operating systems comes with a built-in method of measuring these clock ticks. US20080288216 discloses a method to measure a quantity of usage of a CPU more accurately. This method can be used instead of the built-in method. Another method is disclosed in US2005166204.

CN101331460 discloses a method to dynamically estimate the processing speed and other aspects of a computer program being executed on a computer. This method allows one to estimate the CPU capacity used without requiring any knowledge of the physical details of the computer, which may or may not be beneficial depending on the situation. In order to monitor the energy consumption over time, it is necessary to poll the CPU usage of the process regularly, for example every second. The estimated of energy consumption for a certain period of time is the sum of the poll values in this period.

Hence the measuring step 402 is repeated in step 405 until the application is terminated. How regularly this should be, may depend on the amount of CPU usage needed for this polling and the subsequent calculations. If the polling is done too frequently, the polling process may consume an unacceptable amount of power itself.

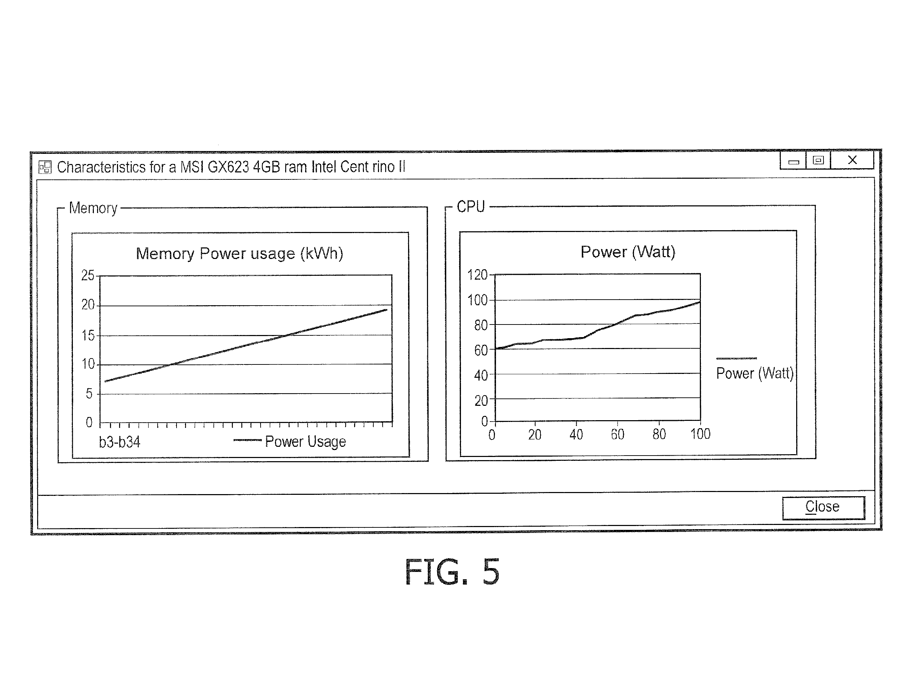

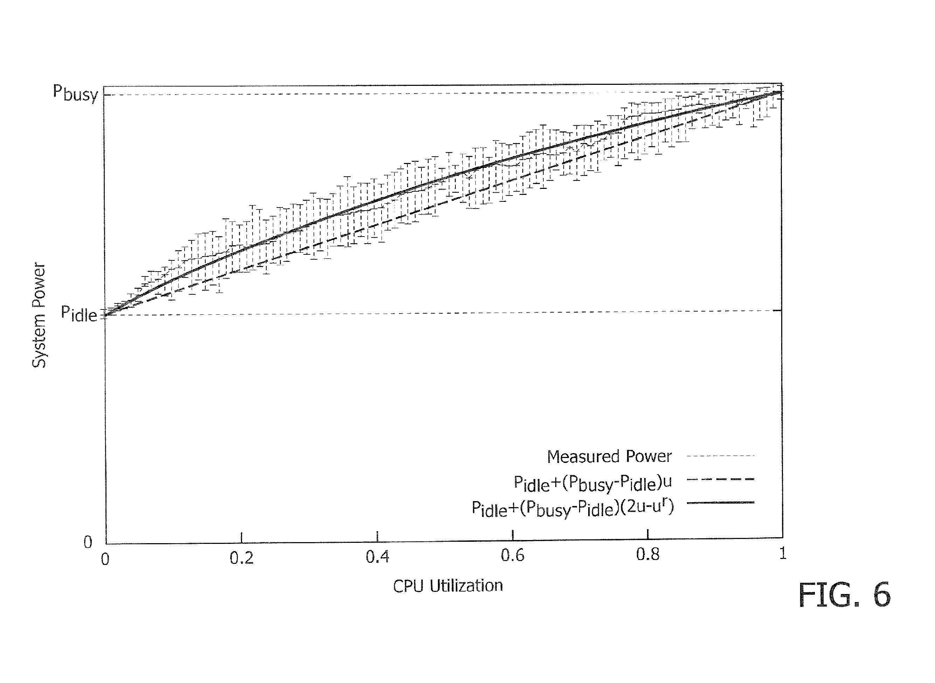

Next, in step 403 the CPU usage in this period is converted in an estimate of power in kWh. This is done by matching the CPU usage to given power usage characteristics, e.g. 5% CPU usage corresponds to 0.2 Watts of power. Examples are given with reference to Figs. 5 and 6 below. Preferably these characteristics are stored as tables or functions to allow for easy and fast matching. Such tables or functions provide estimates of total power usage corresponding to the total CPU usage of the system. This reflects the fact that say 5% of CPU usage consumes more power when the total CPU usage is high than when the total CPU usage is low. The kWh estimate is then obtained by multiplying the power usage with the time period between polling moments.

This method of calculation is preferably corrected for the fact that a CPU still consumes power when the total CPU usage is reported at zero percent by the operating system.

Fig. 5 shows two charts that relate memory and CPU usage to estimated power consumption for the MSI GX623 4GB Intel Centrino II computer system. On the right, for example, if the total CPU usage is at 20%, the measured total power consumption is about 65 Watts. At this level of total CPU usage, an application that uses 5% of CPU usage would use one quarter of this 65 Watts is 16.25 Watts of power in the period between two CPU usage polling moments. If this period is one second, then the application consumes 0,0045139 kWh.

Fig. 6 shows a chart from Xiaobo Fan, Wolf-Dietrich Weber, Luiz Andre Barroso, Power Provisioning for a Warehouse-sized Computer, ISCA 2007 to illustrate system power as a function of CPU utilization. This chart shows among other things the relationship between power in idle and in busy situations and the above-mentioned relationship between total CPU usage and total power usage. The relationship as shown here is clearly nonlinear.

One simple yet effective way of obtaining this information is to measure actual power consumption, e.g. using a power plug adaptor, at several different levels of total CPU usage. The inventors have found that increasing CPU usage with steps of ten percent points and measuring corresponding power consumption produces satisfactory results. For laptop computers it may be necessary to first remove the internal battery, as this ensures all power is drawn from the external power supply where the measurements take place. The table and chart shown in Fig. 5 was produced using this approach.

To ensure the most accurate results in as many situations as possible, the characteristics should be determined for as many different hardware configurations and types as possible. As a guideline one could determine these characteristics of the top 100 best selling computers. In a corporation, often the IT department has standardized the hardware and software configurations of the computers that are being used. This simplifies the determination of these characteristics.

In one embodiment, the method for estimating software power consumption as disclosed in US20070220292 is used to create the data in the above table. This method involves performing simulation using one or more training programs to obtain average power consumption during one or more windows of operation, then using the results to select parameters and coefficients for a processor characterization equation that can estimate power consumption while minimizing error. This document is primarily aimed at estimating power consumption during software development, to ensure the resulting software is 'green'. It does not disclose or suggest monitoring actual power usage when the software is in use.

In case the above-mentioned internet service is used to upload data, this data can be accompanied by some information about the hardware and software of the computer in question. The service provider can analyse the data and the computer's hardware and software to improve its estimates. These estimates can then be provided as updates to the computers in question to allow them to present better estimates to their users.

Next, in step 404 this consumption in kWh is added to a running total to keep track of the total kWh consumed by this application since the moment it was started. The process then repeats itself in step 405 until the application is terminated. At that time, the counter represents the total power consumed in kWh by the application. By dividing this number by the execution time of the application, in step 406 an estimate of power consumption per second is obtained for this application. The method then terminates in step 407.

In some cases it may be possible to obtain a specific signal to indicate that a process has an exceptional load on the processor, memory or other hardware.

As mentioned above, the method as disclosed above can be used not (only) for the computer's CPU, but also for other processors or system resources present in the set-up. For example, modem graphic cards have their own processor called a GPU. The clock ticks of this GPU can be obtained and measured similar to how CPU clock ticks are measured, allowing for similar estimates of power consumption of graphics-hungry applications. Again the estimates are shown in the Task Manager, as per Fig. 3, or be made available to the user in a different manner.

Given the estimate of power consumption, an estimate of CO2 output can be created easily. Most energy suppliers provide on their websites an estimate of the CO2 they produce per kWh. The user can simply enter this number using the configuration module 210.

After the estimates have been prepared, the estimates can be shown in the Task Manager, as per Fig. 3, or be made available to the user in a different manner. For example, the data and estimates can be logged for later analysis, or be uploaded to an internet service where more analysis can be provided for the user's benefit. The latter has the advantage that the service can collect data from multiple computers, which allows it to aggregate numbers and thus to make better estimates. When the software is used in an organization, the data can be uploaded to an internal server instead of to an internet service to ensure this potentially sensitive business data remains within the organization. Of course the data and estimates can be used in multiple manners, e.g. presented in the Task Manager and uploaded to an internet service.

The manner of estimating as disclosed above is straightforward enough to perform in (near) real-time, allowing the user to obtain the best insight in how much power his computer consumes.

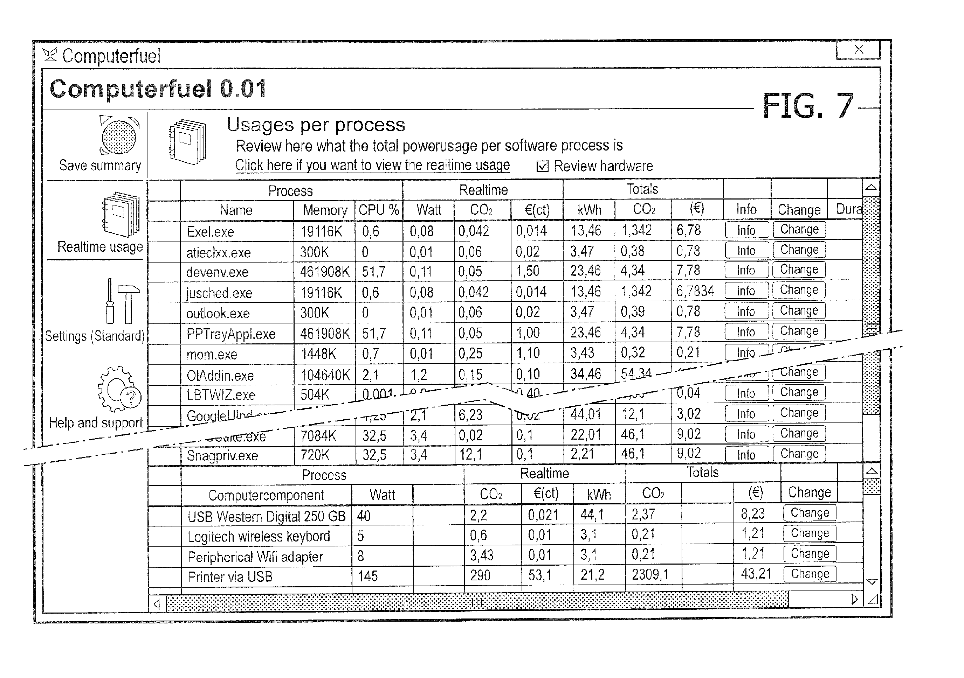

Fig. 7 shows another screenshot relating to an embodiment of the invention. In this variation of Fig. 3 an extra overview has been added to the Task manager application.

This extra overview provides a summary overview of the power savings achieved with respect to specific hardware. Shown are savings related to an external harddisk connected via USB, a wireless keyboard, a Wifi wireless networking adaptor and a printer connected via USB. This optional overview thus further improves the insights that the user can gain about power consumption through the invention.

In this embodiment the power consumption recording module 203 monitors the power consumption and the idle times of hardware and/or software resources and transforms these into an estimate of wasted power. Hardware resources comprise items such as a display screen, printer, hard disk or cooling fan. Software resources comprise software applications and threads, for example e-mail programs, web browsers, media players or printer control software.

The idle time of a resource is the time during which the resource is active but not actually performing any operation. For hardware, this typically means the resource can be used directly as opposed to being in a standby modus. For software, this typically means the resource is running in the background without any actual work to do or any user interaction to handle. This aspect of the invention is based on the insight that power consumed during idle time is essentially wasted power.

Software applications in particular are often in an idle state. For example, e-mail programs are loaded into memory all day but only used a fraction of the time to read and write e-mail. Media players are loaded when the computer starts but remains idle whenever no music or video is to be played. Several software applications these days come with 'preloaders', small background processes that load parts of the application into memory automatically to speed up the actual start of the application itself. Other applications come with helper programs that periodically scan for updates or additions. These helper programs also are idle for most of the time that they run.

In this embodiment an idle time estimation module uses the estimated power consumption in kWh obtained by the process of Fig. 4 to compute from the time the application is idle the money spent on the power needed for this 'idling' of software applications. By showing this amount of money in the overview screen, e.g. the one of Fig. 7, the user is made aware of how much all those rarely-used applications and hardware items actually cost. Alternatively or in addition to this cost estimation, an estimate of $CO_2$ emitted as a result of this 'idling' of software applications can be obtained. This $CO_2$ emission can be transformed into a dollar value when schemes for purchasing $CO_2$ emission rights are available. The user can enter the cost of an emission right for one tonne of $CO_2$ into the configuration module 210.

Further, the power control module 204 automatically terminates an application that has exceeded a certain limit regarding its idle time, for example in terms of cost or $CO_2$ emission. This limit could be made user-configurable or be derived from historical usage data. For example, if historical data collected by the power control module reveals that a certain software application is used only twice a day with four-hour intervals in between, termination could occur after say 30 minutes of idle time as it is then safe to say the application will not be used for several hours to come.

In a further embodiment the power consumption recording module 203 is configured to also record the time during which resources are suspended, disabled or in another state where they use a negligible amount of power. For example, when an often-used software application is terminated, the module could record the time until it is restarted. A hardware example is the time that the display screen is blanked. These times are shown in the overview of Fig. 7 preferably together with an estimate of the monetary savings achieved by these times of little to no power usage.

Optionally, the savings are uploaded to an internet service together with some identification of the computer and/or the user. This allows the service provider to assemble a ranking of power-saving computers or users. This creates a competitive element which encourages users to be as power-sensitive as possible. A similar service can be created within an organization to rank the most power-sensitive users within the organization.

Computers may run multiple operating systems in separate virtual machines at the same time. In a further embodiment, the power consumption estimating module could then be provided in the hypervisor which controls the virtual machines. In such an embodiment, a task manager application for a particular operating system could simply retrieve the power consumption estimate and display it in the overview. This way the individual operating systems do not have to be provided with separate power consumption estimating modules.

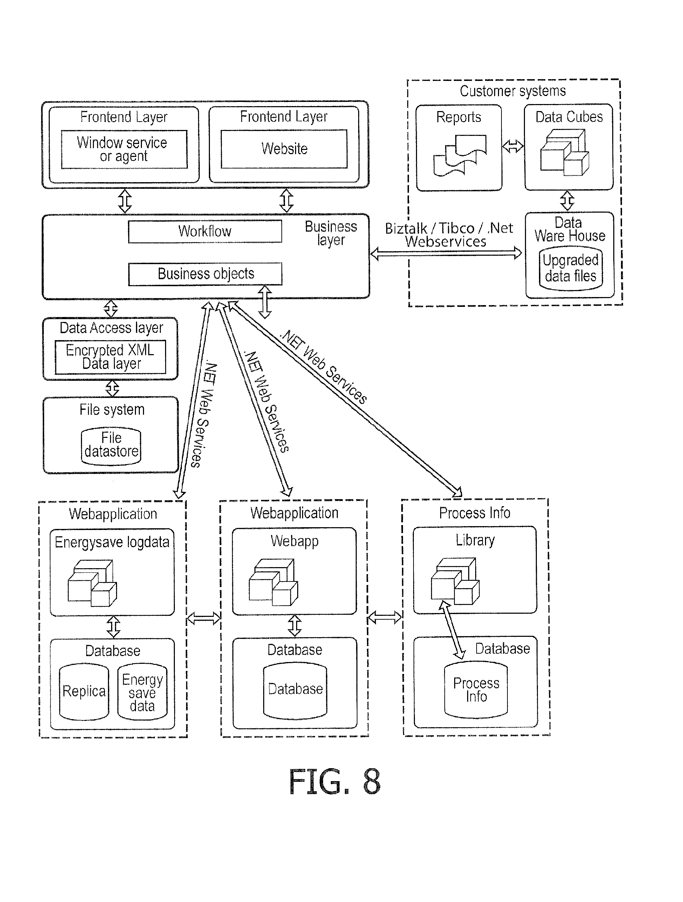

Fig. 8 shows one preferred embodiment as contemplated by the inventors at the time of writing of this document. The embodiment shows a system architecture that implements a preferred embodiment of the invention in an enterprise environment.

Shown at the top left of Fig. 8 is the front-end layer, providing user access to details of the power usage within the enterprise environment. The layer in Fig. 8 presents two preferred implementations: a Windows service or agent and a Website. The Windows service or agent is a task running on the computer in question, and thus provides access to the relevant details from this computer, while the Website provides a centralized view for all computers in the enterprise that provide the relevant information.

Both front-ends are fed data via a business layer. All calculation is done in this layer. This is done this way to minimize redundancy of code. The data access layer is where the calculated usage figures are stored by the agent application. Preferably storage is done in the form of an XML datastructure and/or hashtable, kept in memory. To minimize harddisk usage, the data is preferably only written to disk during shutdown. The business layer in this embodiment uses web services (SOAP) to retrieve information and write log data to a central web server. Various Web applications are provided. The "Energysave logdata" Web application stores all the reported saved energy. The "Webapp" Web application shows the user the energy savings or other relevant information as recorded and lets him or her review and compare the save data.

The "Process info" Web application contains a library of characteristics of various hardware components and software applications, e.g. similar to what is provided in Fig. 5. This library can be used by other applications to quickly retrieve information about a process.

Last, the customer systems component at top right is actually outside the system proper. This software system is used for reporting. Apart from reporting the saved energy to a central webserver, the agent application can also report these savings to the enterprise intranet system(s), where reports can be made from this logdata.

The above provides a description of several useful embodiments that serve to illustrate and describe the invention. The description is not intended to be an exhaustive description of all possible ways in which the invention can be implemented or used. The skilled person will be able to think of many modifications and variations that still rely on the essential features of the invention as presented in the claims. In addition, well-known methods, procedures, components, and circuits have not been described in detail.

The invention is preferably implemented in a computer program product, i.e. a collection of computer program instructions stored on a computer readable storage device for execution by a computer. The instructions of the present invention may be in any interpretable or executable code mechanism, including but not limited to scripts, interpretable programs, dynamic link libraries (DLLs) or Java classes. The instructions can be provided as complete executable programs, as modifications to existing programs or extensions ("plugins") for existing programs. Moreover, parts of the processing of the present invention may be distributed over multiple computers or processors for better performance, reliability, and/or cost.

Machine-readable storage devices suitable for storing computer program instructions include all forms of non-volatile memory, including by way of example semiconductor memory devices, such as EPROM, EEPROM, and flash memory devices, magnetic disks such as the internal and external hard disk drives and removable disks, magnetooptical disks and CD-ROM disks. The computer program product can be distributed on such a storage device, or may be offered for download through HTTP, FTP or similar mechanism using a server connected to a network such as the Internet. Transmission of the computer program product by e-mail is of course also possible. To this end one may connect a server system comprising the storage medium discussed above to a network, and arrange this server for allowing the instructions to be downloaded to client systems connected directly or indirectly to the network.

While the invention has been discussed above in the context of personal computers, which comprise laptops, desktop computers and netbooks, the invention also is useful for other programmable devices that provide the ability to run multiple programs simultaneously. For example, the invention can be used on smartphones running the Windows Mobile or Google Android operating systems. In addition, while the user generally has been presented as a consumer, of course the invention is not limited to consumers. Businesses can also benefit from the invention.

When constructing or interpreting the claims, any mention of reference signs shall not be regarded as a limitation of the claimed feature to the referenced feature or embodiment. The use of the word "comprising" in the claims does not exclude the presence of other features than claimed in a system, product or method implementing the invention. Any reference to a claim feature in the singular shall not exclude the presence of a plurality of this feature. The word "means" in a claim can refer to a single means or to plural means for providing the indicated function.

**Claims**

1.   A method of influencing power consumption of a process being executed on a computer system, comprising calculating an estimate of usage of at least one system resource by the process, converting the estimate of usage into a power consumption estimate, monitoring a time period during which the process is in an idle state and influencing at least one aspect of the computer system if the power consumption estimate exceeds a predefined limit while the at least one process is in an idle state.

2.   The method of claim 1, in which the influencing comprises automatic termination of the process if the power consumption estimate exceeds the predefined limit.

3.   The method of claim 1, being executed on the same computer system as the process.

4.   The method of claim 1, being executed on a computer system that is connected through a network to the computer executing the process.

5.   The method of claim 1, in which the at least one system resource is selected from the group consisting of: a central processing unit (CPU), a storage medium such as a hard disk, a monitor, a graphics card and a communications bus.

6.   The method of claim 1, in which a score is derived from a division of (a) the time period during which the resource is in an energy saving state and (b) the time period the process is in the idle state, and the predefined limit is construed as a lower limit for the score.

7.   A computer system configured for influencing power consumption of a process being executed on the computer system, comprising means for calculating an estimate of usage of at least one system resource by the process, means for converting the estimate of usage into a power consumption estimate, means for monitoring a time period during which the process is in an idle state and means for influencing at least one aspect of the computer system if the power consumption estimate exceeds a predefined limit while the process is in an idle state.

8.   A computer program product comprising instructions for executing the method of the invention on a programmable device

9.   A machine-readable storage medium comprising instructions for executing the method of the invention on a programmable device.

10.  A server system comprising the medium of the previous claim and being connected to a network, arranged for allowing the instructions to be downloaded to client systems connected directly or indirectly to the network.

## FIG. 1

| | | |
|---|---|---|
| 140 | 100 | 110 |
| | 120 | 130 |

## FIG. 2

| | |
|---|---|
| 201 | 203 |
| 202 | 204 |
| 205 | 207 |
| 206 | 210 |

✕ Computerfuel                                                                    ✕

# Computerfuel 0.01

# FIG. 3

## Usages per process

Review here what the total powerusage per software process is

Click here if you want to view the realtime usage   ☐ Review hardware

Save summary

Realtime usage

Settings (Standard)

Help and support

Reports

| Process | | | Realtime | | | Totals | | | | | Dura |
|---|---|---|---|---|---|---|---|---|---|---|---|
| Name | Memory | CPU % | Watt | CO₂ | €(ct) | kWh | CO₂ | (€) | Info | Change | |
| Exel.exe | 19116K | 0,6 | 0,08 | 0,042 | 0,014 | 13,46 | 1,342 | 6,78 | Info | Change | |
| atieclxx.exe | 300K | 0 | 0,01 | 0,06 | 0,02 | 3,47 | 0,38 | 0,78 | Info | Change | |
| devenv.exe | 461908K | 51,7 | 0,11 | 0,05 | 1,50 | 23,46 | 4,34 | 7,78 | Info | Change | |
| jusched.exe | 19116K | 0,6 | 0,08 | 0,042 | 0,014 | 13,46 | 1,342 | 6,7834 | Info | Change | |
| outlook.exe | 300K | 0 | 0,01 | 0,06 | 0,02 | 3,47 | 0,39 | 0,78 | Info | Change | |
| PPTrayAppl.exe | 461908K | 51,7 | 0,11 | 0,05 | 1,00 | 23,46 | 4,34 | 7,78 | Info | Change | |
| mom.exe | 1448K | 0,7 | 0,01 | 0,25 | 1,10 | 3,43 | 0,32 | 0,21 | Info | Change | |
| OlAddin.exe | 104640K | 2,1 | 1,2 | 0,15 | 0,10 | 34,46 | 54,34 | 1,84 | Info | Change | |
| LBTWIZ.exe | 504K | 0,001 | 0,3 | 0,67 | 0,40 | 1,01 | 4,00 | 0,04 | Info | Change | |
| GoogleUlpd.exe | 4640K | 1,1 | 0,3 | 0,67 | 0,40 | 1,01 | 4,00 | 0,04 | Info | Change | |
| MobilConnect.exe | 6720K | 1,25 | 2,1 | 6,23 | 0,02 | 44,01 | 12,1 | 3,02 | Info | Change | |
| PCSuite.exe | 7084K | 32,5 | 3,4 | 0,02 | 0,1 | 22,01 | 46,1 | 9,02 | | | |
| Snagpriv.exe | 720K | 32,5 | 3,4 | 12,1 | 0,1 | 2,21 | | | Info | Change | |
| CCC.exe | 1444K | | | 12,1 | | | 46,1 | 9,02 | Info | Change | |
| | 2260K | 32,5 | 3,4 | 12,1 | 0,1 | 2,21 | 46,1 | 9,02 | Info | Change | |
| csrss.exe | 1608K | 32,5 | 3,4 | 12,1 | 0,1 | 2,21 | 46,1 | 9,02 | Info | Change | |
| GrooveMonitor.exe | 1672K | 32,5 | 3,4 | 12,1 | 0,1 | 2,21 | 46,1 | 9,02 | Info | Change | |

401

Measure
CPU usage — 402

Convert
to kWh — 403

Update
running total — 404

App
terminated? — 405

Obtain
final estimate — 406

407

FIG. 4

FIG. 5

FIG. 6

✖ Computerfuel　　　　　　　　　　　　　　　　　　　　　　　　　　　[X]

# Computerfuel 0.01

# FIG. 7

## Usages per process
Review here what the total powerusage per software process is
Click here if you want to view the realtime usage　　☑ Review hardware

Save summary

Realtime usage

Settings (Standard)

Help and support

| Process | | | Realtime | | | Totals | | | | | |
|---|---|---|---|---|---|---|---|---|---|---|---|
| Name | Memory | CPU % | Watt | $CO_2$ | €(ct) | kWh | $CO_2$ | (€) | Info | Change | Dura |
| Exel.exe | 19116K | 0,6 | 0,08 | 0,042 | 0,014 | 13,46 | 1,342 | 6,78 | Info | Change | |
| atieclxx.exe | 300K | 0 | 0,01 | 0,06 | 0,02 | 3,47 | 0,38 | 0,78 | Info | Change | |
| devenv.exe | 461908K | 51,7 | 0,11 | 0,05 | 1,50 | 23,46 | 4,34 | 7,78 | Info | Change | |
| jusched.exe | 19116K | 0,6 | 0,08 | 0,042 | 0,014 | 13,46 | 1,342 | 6,7834 | Info | Change | |
| outlook.exe | 300K | 0 | 0,01 | 0,06 | 0,02 | 3,47 | 0,39 | 0,78 | Info | Change | |
| PPTrayAppl.exe | 461908K | 51,7 | 0,11 | 0,05 | 1,00 | 23,46 | 4,34 | 7,78 | Info | Change | |
| mom.exe | 1448K | 0,7 | 0,01 | 0,25 | 1,10 | 3,43 | 0,32 | 0,21 | Info | | |
| OIAddin.exe | 104640K | 2,1 | 1,2 | 0,15 | 0,10 | 34,46 | 54,34 | | | Change | |
| LBTWIZ.exe | 504K | 0,001 | | | 40 | | | 0,04 | Info | Change | |
| GoogleU... | | 1,25 | 2,1 | 6,23 | 0,02 | 44,01 | 12,1 | 3,02 | Info | Change | |
| ...ate.exe | 7084K | 32,5 | 3,4 | 0,02 | 0,1 | 22,01 | 46,1 | 9,02 | Info | Change | |
| Snagpriv.exe | 720K | 32,5 | 3,4 | 12,1 | 0,1 | 2,21 | 46,1 | 9,02 | Info | Change | |

| Process | | Realtime | | | Totals | | | |
|---|---|---|---|---|---|---|---|---|
| Computercomponent | Watt | | $CO_2$ | €(ct) | kWh | $CO_2$ | (€) | Change |
| USB Western Digital 250 GB | 40 | | 2,2 | 0,021 | 44,1 | 2,37 | 8,23 | Change |
| Logitech wireless keybord | 5 | | 0,6 | 0,01 | 3,1 | 0,21 | 1,21 | Change |
| Peripherical Wifi adapter | 8 | | 3,43 | 0,01 | 3,1 | 0,21 | 1,21 | Change |
| Printer via USB | 145 | | 290 | 53,1 | 21,2 | 2309,1 | 43,21 | Change |

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004260411 A
- US 5996083 A
- KR 20050002667
- US 20090007128 A1
- US 20080288216 A
- US 2005166204 A
- CN 101331460
- US 20070220292 A

**Non-patent literature cited in the description**

- **AVI MENDELSON.** Memory management challenges in the power-aware computing era. *Proceedings of the 5th international symposium on Memory management,* 2006, ISBN 1-59593-221-6, 1-2
- **RAJESH CHEDA ; DAN SHOOKOWSKY ; STEVE STEFANOVICH ; JOE TOSCANO.** Profiling Energy Usage for Efficient Consumption. *The Architecture Journal,* January 2009, msdn.microsoft.com/en-us/library/dd393308.aspx
- **XIAOBO FAN ; WOLF-DIETRICH WEBER ; LUIZ ANDRE BARROSO.** Power Provisioning for a Warehouse-sized Computer. *ISCA,* 2007